# EUROPEAN PATENT APPLICATION

(11) **EP 2 874 300 A2**
(43) Date of publication of application: **20.05.2015**
(21) Application number: 14193269.9
(22) Date of filing: 14.11.2014
(51) Int. Cl.: H02M 7/48, H02M 1/42, H02M 5/458

(54) **Power conversion circuit and method for controlling direct current-alternating current circuit**

(30) Priority: 15.11.2013 CN 201310571479
(71) Applicant: Huawei Technologies Co., Ltd., Longgang District Shenzhen, Guangdong 518129 (CN)
(72) Inventor: Pan, Denghai, 518129, P.R. Shenzhen Guangdong (CN); Huang, Boning, 518129, P.R. Shenzhen Guangdong (CN); Zou, Lixia, 518129, P.R. Shenzhen Guangdong (CN)
(74) Representative: Lord, Michael

(57) **Abstract**

The present invention relates to a power conversion circuit and a method for controlling a direct current-alternating current circuit. The power conversion circuit includes: an AC-DC circuit, a direct current-alternating current DC-AC circuit, and a first filter capacitor, where the AC-DC circuit, the DC-AC circuit, and the first filter capacitor are connected in parallel on a direct current bus. The AC-DC circuit includes: a power factor correction PFC circuit, a first bridge arm, and a second bridge arm, where the PFC circuit, the first bridge arm, and the second bridge arm are connected in parallel on the direct current bus. The DC-AC circuit includes: a third bridge arm, a fourth bridge arm, a first inductor, a second inductor, a first switch transistor, and a second switch transistor, where the third bridge arm and the fourth bridge arm are connected in parallel on the direct current bus, a second end of the first inductor is connected to a first end of the first switch transistor, a second end of the first switch transistor is connected to the direct current bus, a first end of the second inductor is connected to a connection point of two switch transistors included by the fourth bridge arm, a second end of the second inductor is connected to a first end of the second switch transistor, and a second end of the second switch transistor is connected to the direct current bus.

## Description

### TECHNICAL FIELD

The present invention relates to the field of circuit technologies, and in particular, to a power conversion circuit and a method for controlling a direct current-alternating current circuit.

### BACKGROUND

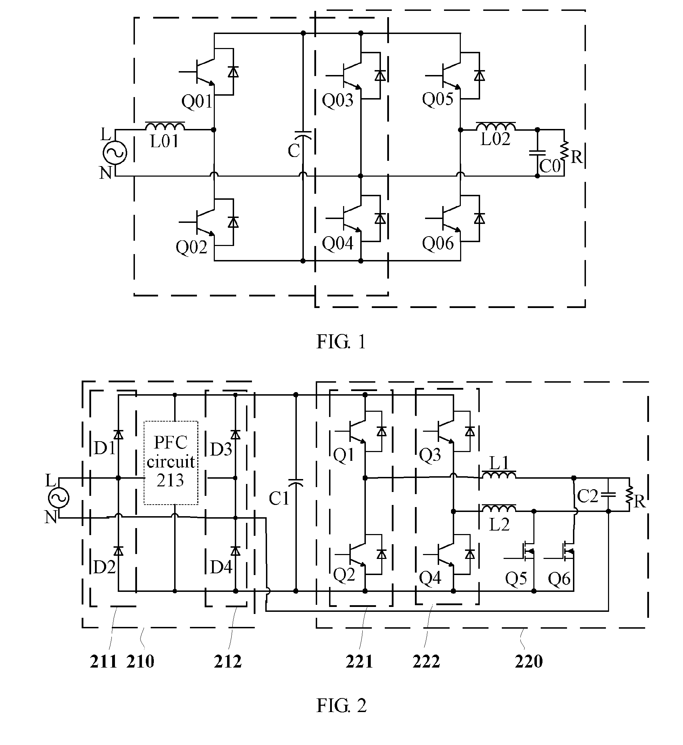

An existing power conversion circuit is shown in FIG. 1. The power conversion circuit includes an H-bridge alternating current-direct current (DC-AC) circuit and an H-bridge DC-AC circuit. An inductor L01, a switch transistor Q01, a switch transistor Q02, a switch transistor Q03, and a switch transistor Q04 form the AC-DC circuit, where the switch transistor Q01 and the switch transistor Q02 form a high-frequency switching bridge arm of the AC-DC circuit, and the switch transistor Q03 and the switch transistor Q04 form a 50/60 Hz low-frequency switching bridge arm of the AC-DC circuit. A switch transistor Q05, a switch transistor Q06, the switch transistor Q03, the switch transistor Q04, and an inductor L02 form the DC-AC circuit, where the switch transistor Q05 and the switch transistor Q06 form a high-frequency switching bridge arm of the DC-AC circuit, and the switch transistor Q03 and the switch transistor Q04 form a 50/60 Hz low-frequency switching bridge arm of the AC-DC circuit. C is a filter capacitor of a direct current bus. Therefore, it can be seen that the AC-DC circuit and the DC-AC circuit share the low-frequency switching bridge arm.

Because the power conversion circuit shown in FIG. 1 uses the solution in which the AC-DC circuit and the DC-AC circuit share the low-frequency switching bridge arm, there is a coupling relationship between the AC-DC circuit and the DC-AC circuit, and input and output frequencies and phases need to be strictly synchronous, resulting in complex control over the switch transistors. In addition, in a case in which the AC-DC circuit and the DC-AC circuit share the low-frequency switching bridge arm, the AC-DC circuit generally needs to operate in a continuous current mode; therefore, the switch transistor Q01 and the switch transistor Q02 must be insulated gate bipolar transistors (Insulated Gate Bipolar Transistor, IGBT), rather than metal-oxide-semiconductor-field-effect transistors (Metal-Oxide-Semiconductor Field-Effect Transistor, MOSFET), leading to low conversion efficiency of the AC-DC circuit. However, the DC-AC circuit can be controlled only by means of unipolar modulation; in a case in which the DC-AC circuit has a low load, a waveform output by the DC-AC circuit is distorted, and meanwhile the unipolar modulation leads to high common-mode interference.

### SUMMARY

In view of this, the present invention provides a power conversion circuit and a method for controlling a DC-AC circuit, which can effectively reduce complexity of controlling switch transistors in the power conversion circuit, improve conversion efficiency of an AC-DC circuit, ensure quality of a waveform output by the DC-AC circuit, and prevent common-mode interference.

According to a first aspect, an embodiment of the present invention provides a power conversion circuit, where the power conversion circuit includes: an alternating current-direct current AC-DC circuit, a direct current-alternating current DC-AC circuit, and a first filter capacitor, where the AC-DC circuit, the DC-AC circuit, and the first filter capacitor are connected in parallel on a direct current bus;
the AC-DC circuit includes: a power factor correction PFC circuit, a first bridge arm, and a second bridge arm;
the PFC circuit, the first bridge arm, and the second bridge arm are connected in parallel on the direct current bus, where the first bridge arm includes two diodes that are connected in series in a same direction, the second bridge arm includes two diodes that are connected in series in a same direction, a connection point of the two diodes included by the first bridge arm is connected to a live wire of an alternating current source, and a connection point of the two diodes included by the second bridge arm is connected to a neutral wire of the alternating current source;
two ends of the second bridge arm are separately connected to two ends of the first filter capacitor;
the DC-AC circuit includes: a third bridge arm, a fourth bridge arm, a first inductor, a second inductor, a first switch transistor, a second switch transistor, a second filter capacitor, and a load resistor; and
the third bridge arm and the fourth bridge arm are connected in parallel on the direct current bus, where the third bridge arm includes two switch transistors that are connected in series in a same direction, the fourth bridge arm includes two switch transistors that are connected in series in a same direction, a first end of the first inductor is connected to a connection point of the two switch transistors included by the third bridge arm, a second end of the first inductor is connected to a first end of the first switch transistor, a second end of the first switch transistor is connected to the direct current bus, a first end of the second inductor is connected to a connection point of the two switch transistors included by the fourth bridge arm, a second end of the second inductor is connected to a first end of the second switch transistor, a second end of the second switch transistor is connected to the direct current bus, the second end of the first inductor and the second end of the second inductor are further separately connected to two ends of the second filter capacitor, the two ends of the second filter capacitor are further separately connected to two ends of the load resistor, and one end of the second filter capacitor is further connected to the neutral wire of the alternating current source.

In a first possible implementation manner of the first aspect, the PFC circuit is specifically an interleaved, soft-switching, and bridgeless PFC circuit that is controlled in a triangular current mode TCM.

In a second possible implementation manner of the first aspect, the PFC circuit is specifically a bridgeless PFC that is controlled in a three state switch cell current continue mode TSSC CCM.

With reference to the first aspect, the first possible implementation manner of the first aspect, or the second possible implementation manner of the first aspect, in a third possible implementation manner, the switch transistors included by the third bridge arm and the fourth bridge arm are each an insulated gate bipolar transistor IGBT that a diode is integrated into.

With reference to the first aspect, the first possible implementation manner of the first aspect, or the second possible implementation manner of the first aspect, in a fourth possible implementation manner, the first switch transistor and the second switch transistor are each a metal-oxide-semiconductor-field-effect transistor MOSFET.

According to a second aspect, an embodiment of the present invention provides a method for controlling a DC-AC circuit, where the method for controlling a DC-AC circuit is applied to a DC-AC circuit included in any power conversion circuit according to the first aspect; and
the method includes:
when a load of the DC-AC circuit is greater than a preset load threshold, controlling the DC-AC circuit by means of unipolar modulation; and
when a load of the DC-AC circuit is not greater than a preset load threshold, controlling the DC-AC circuit by means of bipolar modulation.

In a first possible implementation manner of the second aspect, the controlling the DC-AC circuit by means of unipolar modulation is specifically: skipping controlling a switch transistor that is included by a third bridge arm and is connected to a negative electrode of a direct current bus, and a switch transistor that is included by a fourth bridge arm and is connected to the negative electrode of the direct current bus; controlling, according to a period based on which the DC-AC circuit outputs an industrial frequency alternating current, a switch transistor that is included by the third bridge arm and is connected to a positive electrode of the direct current bus, and a switch transistor that is included by the fourth bridge arm and is connected to the positive electrode of the direct current bus, to be alternately in a turned-on state; and controlling, according to the period based on which the DC-AC circuit outputs the industrial frequency alternating current, a first switch transistor and a second switch transistor to be alternately in a turned-on state.

In a second possible implementation manner of the second aspect, the controlling the DC-AC circuit by means of bipolar modulation is specifically: skipping controlling a first switch transistor and a second switch transistor; and controlling two switch transistors included by a third bridge arm and two switch transistors included by a fourth bridge arm to be alternately in a turned-on state, where the switch transistor that is included by the third bridge arm and is connected to a positive electrode of a direct current bus, and the switch transistor that is included by the fourth bridge arm and is connected to a negative electrode of the direct current bus are in a same state; and the other switch transistor that is included by the third bridge arm and is connected to the negative electrode of the direct current bus, and the other switch transistor that is included by the fourth bridge arm and is connected to the positive electrode of the direct current bus are in a same state.

By means of the foregoing solution, an AC-DC circuit in a power conversion circuit independently uses an industrial frequency switching bridge arm, which implements decoupling with a DC-AC circuit. In addition, an input and an output of the power conversion circuit are connected to a negative electrode of an alternating current source. Therefore, complexity of controlling switch transistors in the power conversion circuit can be effectively reduced. Besides, because the AC-DC circuit independently uses the industrial frequency switching bridge arm, the AC-DC circuit does not need to always operate in a continuous current mode; therefore, the switch transistors in the AC-DC circuit may all be MOSFETs, thereby improving conversion efficiency of the AC-DC circuit. Moreover, the DC-AC circuit may be controlled by means of unipolar modulation and bipolar modulation, so as to ensure quality of a waveform output by the DC-AC circuit and prevent common-mode interference.

### BRIEF DESCRIPTION OF DRAWINGS

FIG. 1 is a structural diagram of a power conversion circuit in the prior art;
FIG. 2 is a structural diagram of a power conversion circuit according to Embodiment 1 of the present invention;
FIG. 3 is a structural diagram of another power conversion circuit according to Embodiment 1 of the present invention; and
FIG. 4 is a structural diagram of still another power conversion circuit according to Embodiment 1 of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

A power conversion circuit according to Embodiment 1 of the present invention is described in detail below by using FIG. 2 as an example. FIG. 2 is a structural diagram of the power conversion circuit according to Embodiment 1 of the present invention.

As shown in FIG. 2, the power conversion circuit includes: an AC-DC circuit 210, a DC-AC circuit 220, and a first filter capacitor C1, where the AC-DC circuit 210, the DC-AC circuit 220, and the first filter capacitor C1 are connected in parallel on a direct current bus.

The AC-DC circuit 210 includes: a first bridge arm 211, a second bridge arm 212, and a power factor correction (Power Factor Correction, PFC) circuit 213, where the first bridge arm 211, the second bridge arm 212, and the PFC circuit 213 are connected in parallel on the direct current bus; the first bridge arm 211 includes two diodes (a diode D1 and a diode D2) that are connected in series in a same direction; the second bridge arm 212 includes two diodes (a diode D3 and a diode D4) that are connected in series in a same direction; a connection point of the two diodes included by the first bridge arm 211 is connected to a live wire L of an alternating current source, and a connection point of the two diodes included by the second bridge arm 212 is connected to a neutral wire N of the alternating current source.

Two ends of the second bridge arm 212 are separately connected to two ends of the first filter capacitor C1.

The DC-AC circuit 220 includes: a third bridge arm 221, a fourth bridge arm 222, a first inductor L1, a second inductor L2, a first switch transistor Q6, a second switch transistor Q5, a second filter capacitor C2, and a load resistor R.

The third bridge arm 221 and the fourth bridge arm 222 are connected in parallel on the direct current bus, the third bridge arm 221 includes two switch transistors (a switch transistor Q1 and a switch transistor Q2) that are connected in series in a same direction, the fourth bridge arm 222 includes two switch transistors (a switch transistor Q3 and a switch transistor Q4) that are connected in series in a same direction, a first end of the first inductor L1 is connected to a connection point of the two switch transistors included by the third bridge arm 221, a second end of the first inductor L1 is connected to a first end of the first switch transistor Q6, a second end of the first switch transistor Q6 is connected to the direct current bus, a first end of the second inductor L2 is connected to a connection point of the two switch transistors included by the fourth bridge arm 222, a second end of the second inductor L2 is connected to a first end of the second switch transistor Q5, a second end of the second switch transistor Q5 is connected to the direct current bus, the second end of the first inductor L1 and the second end of the second inductor L2 are further separately connected to two ends of the second filter capacitor C2, the two ends of the second filter capacitor C2 are further separately connected to two ends of the load resistor R, and one end of the second filter capacitor C2 is further connected to the neutral wire N of the alternating current source.

The switch transistor Q1, the switch transistor Q2, the switch transistor Q3, and the switch transistor Q4 are each an IGBT that a diode is integrated into. The switch transistor Q5 and the switch transistor Q6 are each an MOSFET.

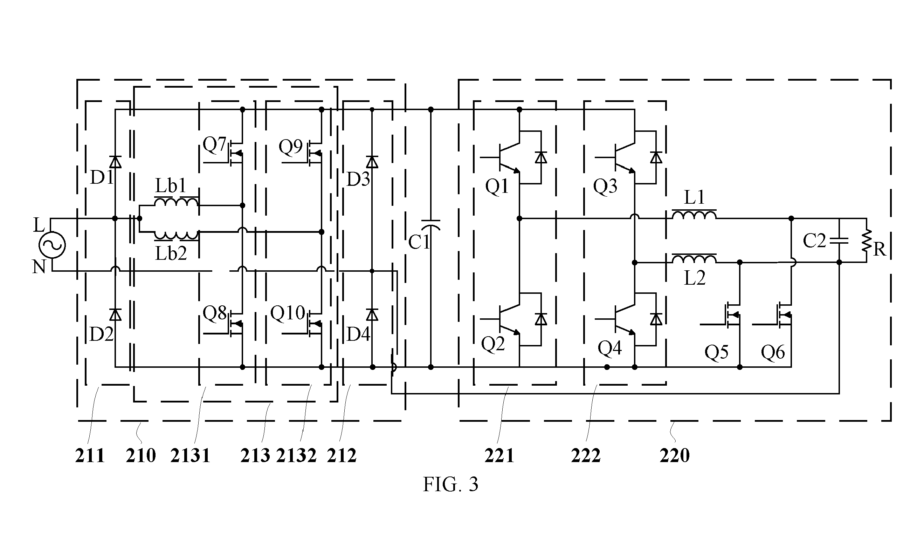

Optionally, the PFC circuit 213 is specifically an interleaved, soft-switching, and bridgeless PFC circuit that is controlled in a triangular current mode (triangular current mode, TCM). A specific structure of the PFC circuit is shown in FIG. 3, where the PFC circuit 213 includes a fifth bridge arm 2131, a sixth bridge arm 2132, a third inductor Lb1, and a fourth inductor Lb2.

The fifth bridge arm 2131 and the sixth bridge arm 2132 are connected in parallel on the direct current bus. The fifth bridge arm 2131 includes two switch transistors (a switch transistor Q7 and a switch transistor Q8) that are connected in series in a same direction, and the sixth bridge arm 2132 includes two switch transistors (a switch transistor Q9 and a switch transistor Q10) that are connected in series in a same direction. A first end of the third inductor Lb1 is connected to a connection point of the two switch transistors included by the fifth bridge arm 2131, a first end of the fourth inductor Lb2 is connected to a connection point of the two switch transistors included by the sixth bridge arm 2132, and a connection point of a second end of the third inductor Lb1 and a second end of the fourth inductor Lb2 is connected to the live wire L of the alternating current source.

The switch transistor Q7, the switch transistor Q8, the switch transistor Q9, and the switch transistor Q10 are each an MOSFET.

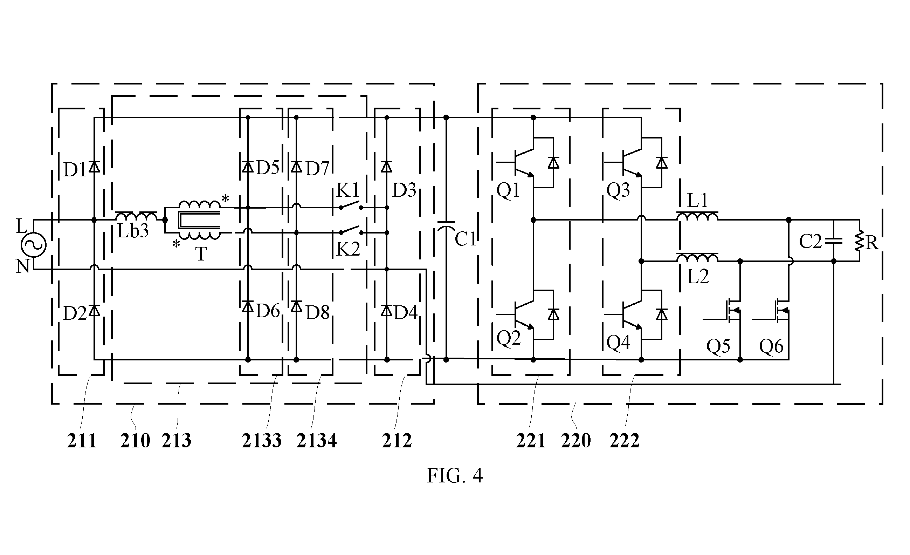

Optionally, the PFC circuit 213 is specifically a bridgeless PFC that is controlled in a three state switch cell current continue mode TSSC CCM (three state switch cell Current continue mode, TSSC CCM). A specific structure of the PFC circuit is shown in FIG. 4, where the FPC circuit 213 includes: a seventh bridge arm 2133, an eighth bridge arm 2134, a fifth inductor Lb3, an autotransformer T, a first switch K1, and a second switch K2.

The seventh bridge arm 2133 and the eighth bridge arm 2134 are connected in parallel on the direct current bus. The seventh bridge arm 2133 includes two diodes (a diode D5 and a diode D6) that are connected in series in a same direction, and the eighth bridge arm 2134 includes two diodes (a diode D7 and a diode D8) that are connected in series in a same direction. A first end of the fifth inductor Lb3 is connected to the live wire L of the alternating current source, and a second end of the fifth inductor Lb3 is connected to a central tap of the autotransformer T. A first coil of the autotransformer T is connected to a connection point of the two diodes included by the seventh bridge arm 2133, the connection point of the two diodes included by the seventh bridge arm 2133 is further connected to a first end of the first switch K1, and a second end of the first switch K1 is connected to the connection point of the two diodes included by the second bridge arm 212. A second coil of the autotransformer T is connected to a connection point of the two diodes included by the eighth bridge arm 2134, the connection point of the two diodes included by the eighth bridge arm 2134 is further connected to a first end of the second switch K2, and a second end of the second switch K2 is connected to the connection point of the two diodes included by the second bridge arm 212.

It can be seen from FIG. 2, FIG. 3, and FIG. 4 that an AC-DC circuit in a power conversion circuit according to this embodiment of the present invention independently uses an industrial frequency switching bridge arm (a second bridge arm), which implements decoupling with a DC-AC circuit. In addition, an input and an output of the power conversion circuit are connected to a negative electrode of an alternating current source. Therefore, complexity of controlling switch transistors in the power conversion circuit can be effectively reduced. Besides, because the AC-DC circuit independently uses the industrial frequency switching bridge arm, the AC-DC circuit does not need to always operate in a continuous current mode; therefore, the switch transistors in the AC-DC circuit may all be MOSFETs, thereby improving conversion efficiency of the AC-DC circuit. Moreover, the DC-AC circuit may be controlled by means of unipolar modulation and bipolar modulation, so as to ensure quality of a waveform output by the DC-AC circuit and prevent common-mode interference.

Embodiment 2 of the present invention provides a method for controlling a DC-AC circuit, where the method is applied to a DC-AC circuit included in the power conversion circuit according to Embodiment 1 of the present invention.

The method for controlling a DC-AC circuit includes:
when a load of the DC-AC circuit is greater than a preset load threshold, controlling the DC-AC circuit by means of unipolar modulation; or when a load of the DC-AC circuit is not greater than a preset load threshold, controlling the DC-AC circuit by means of bipolar modulation.

When the load of the DC-AC circuit is greater than the preset load threshold, the DC-AC circuit is controlled by means of unipolar modulation.

Specifically, neither the switch transistor Q2 nor the switch transistor Q4 is controlled; the switch transistor Q1 and the switch transistor Q3 are controlled, according to a period based on which the DC-AC circuit outputs an industrial frequency alternating current, to be alternately in a turned-on state; the switch transistor Q5 and the switch transistor Q6 are controlled, according to the period based on which the DC-AC circuit outputs the industrial frequency alternating current, to be alternately in a turned-on state.

When the load of the DC-AC circuit is greater than the preset load threshold, the DC-AC circuit is controlled by means of unipolar modulation, thereby ensuring quality of an output waveform while ensuring high operation efficiency of the DC-AC circuit.

When the load of the DC-AC circuit is not greater than the preset load threshold, the DC-AC circuit is controlled by means of bipolar modulation.

Specifically, neither the switch transistor Q5 nor the switch transistor Q6 is controlled, and the switch transistor Q1, the switch transistor Q2, the switch transistor Q3, and the switch transistor Q4 are controlled to be alternately in a turned-on state, where the switch transistor Q1 and the switch transistor Q4 are in a same state, and the switch transistor Q2 and the switch transistor Q3 are in same state.

When the load of the DC-AC circuit is not greater than the preset load threshold, the output waveform may be distorted if unipolar modulation is used. Therefore, when the load of the DC-AC circuit is not greater than the preset load threshold, the DC-AC circuit is controlled by means of bipolar modulation, so as to ensure the quality of the output waveform.

By using the method for controlling a DC-AC circuit according to Embodiment 2 of the present invention, when a load of the DC-AC circuit is greater than a preset load threshold, the DC-AC circuit is controlled by means of unipolar modulation; when the load of the DC-AC circuit is not greater than the preset load threshold, the DC-AC circuit is controlled by means of bipolar modulation, thereby ensuring quality of an output waveform while ensuring high operation efficiency of the DC-AC circuit.

The foregoing specific embodiments clarify the objective, technical solutions, and benefits of the present invention in detail. It should be understood that the foregoing descriptions are merely specific embodiments of the present invention, but are not intended to limit the protection scope of the present invention. Any modification, equivalent replacement, or improvement made without departing from the principle of the present invention should fall within the protection scope of the present invention.

## Claims

1. A power conversion circuit, wherein the power conversion circuit comprises: an alternating current-direct current AC-DC circuit, a direct current-alternating current DC-AC circuit, and a first filter capacitor, wherein the AC-DC circuit, the DC-AC circuit, and the first filter capacitor are connected in parallel on a direct current bus;
the AC-DC circuit comprises: a power factor correction PFC circuit, a first bridge arm, and a second bridge arm;
the PFC circuit, the first bridge arm, and the second bridge arm are connected in parallel on the direct current bus, wherein the first bridge arm comprises two diodes that are connected in series in a same direction, the second bridge arm comprises two diodes that are connected in series in a same direction, a connection point of the two diodes comprised by the first bridge arm is connected to a live wire of an alternating current source, and a connection point of the two diodes comprised by the second bridge arm is connected to a neutral wire of the alternating current source;
two ends of the second bridge arm are separately connected to two ends of the first filter capacitor;
the DC-AC circuit comprises: a third bridge arm, a fourth bridge arm, a first inductor, a second inductor, a first switch transistor, a second switch transistor, a second filter capacitor, and a load resistor; and
the third bridge arm and the fourth bridge arm are connected in parallel on the direct current bus, wherein the third bridge arm comprises two switch transistors that are connected in series in a same direction, the fourth bridge arm comprises two switch transistors that are connected in series in a same direction, a first end of the first inductor is connected to a connection point of the two switch transistors comprised by the third bridge arm, a second end of the first inductor is connected to a first end of the first switch transistor, a second end of the first switch transistor is connected to the direct current bus, a first end of the second inductor is connected to a connection point of the two switch transistors comprised by the fourth bridge arm, a second end of the second inductor is connected to a first end of the second switch transistor, a second end of the second switch transistor is connected to the direct current bus, the second end of the first inductor and the second end of the second inductor are further separately connected to two ends of the second filter capacitor, the two ends of the second filter capacitor are further separately connected to two ends of the load resistor, and one end of the second filter capacitor is further connected to the neutral wire of the alternating current source.

2. The power conversion circuit according to claim 1, wherein the PFC circuit is specifically an interleaved, soft-switching, and bridgeless PFC circuit that is controlled in a triangular current mode TCM.

3. The power conversion circuit according to claim 1, wherein the PFC circuit is specifically a bridgeless PFC that is controlled in a three state switch cell current continue mode TSSC CCM.

4. The power conversion circuit according to any one of claims 1 to 3, wherein the switch transistors comprised by the third bridge arm and the fourth bridge arm are each an insulated gate bipolar transistor IGBT that a diode is integrated into.

5. The power conversion circuit according to any one of claims 1 to 3, wherein the first switch transistor and the second switch transistor are each a metal-oxide-semiconductor-field-effect transistor MOSFET.

6. A method for controlling a DC-AC circuit, wherein the method for controlling a DC-AC circuit is applied to a DC-AC circuit comprised in the power conversion circuit according to any one of claims 1 to 5; and
the method comprises:
when a load of the DC-AC circuit is greater than a preset load threshold, controlling the DC-AC circuit by means of unipolar modulation; and
when a load of the DC-AC circuit is not greater than a preset load threshold, controlling the DC-AC circuit by means of bipolar modulation.

7. The method according to claim 6, wherein the controlling the DC-AC circuit by means of unipolar modulation comprises:
skipping controlling a switch transistor that is comprised by a third bridge arm and is connected to a negative electrode of a direct current bus, and a switch transistor that is comprised by a fourth bridge arm and is connected to the negative electrode of the direct current bus;
controlling, according to a period based on which the DC-AC circuit outputs an industrial frequency alternating current, a switch transistor that is comprised by the third bridge arm and is connected to a positive electrode of the direct current bus, and a switch transistor that is comprised by the fourth bridge arm and is connected to the positive electrode of the direct current bus, to be alternately in a turned-on state; and
controlling, according to the period based on which the DC-AC circuit outputs the industrial frequency alternating current, a first switch transistor and a second switch transistor to be alternately in a turned-on state.

8. The method according to claim 6, wherein the controlling the DC-AC circuit by means of bipolar modulation comprises:
skipping controlling a first switch transistor and a second switch transistor; and
controlling two switch transistors comprised by a third bridge arm and two switch transistors comprised by a fourth bridge arm to be alternately in a turned-on state, wherein
the switch transistor that is comprised by the third bridge arm and is connected to a positive electrode of a direct current bus, and the switch transistor that is comprised by the fourth bridge arm and is connected to a negative electrode of the direct current bus are in a same state; the other switch transistor that is comprised by the third bridge arm and is connected to the negative electrode of the direct current bus, and the other switch transistor that is comprised by the fourth bridge arm and is connected to the positive electrode of the direct current bus are in a same state.
